(19)

(11) **EP 3 339 660 B1**

(12) **EUROPEAN PATENT SPECIFICATION**

(45) Date of publication and mention of the grant of the patent: **03.02.2021 Bulletin 2021/05**

(51) Int Cl.: ***F16B 5/02*** $^{(2006.01)}$ ***B61D 15/06*** $^{(2006.01)}$ ***B61F 1/10*** $^{(2006.01)}$

(21) Application number: **16206833.2**

(22) Date of filing: **23.12.2016**

(54) **FASTENING DEVICE AND METHOD FOR CONNECTING AN END MASK OF A RAIL VEHICLE TO A STRUCTURAL ELEMENT OF A VEHICLE BODY AND ASSOCIATED RAIL VEHICLE**

BEFESTIGUNGSVORRICHTUNG UND VERFAHREN ZUM VERBINDEN EINER ENDMASKE EINES SCHIENENFAHRZEUGS AN EINEM STRUKTURELEMENT EINES WAGENKASTENS UND ENTSPRECHENDES SCHIENENFAHRZEUG

DISPOSITIF DE FIXATION ET PROCÉDÉ DE CONNEXION D’UN MASQUE D’EXTRÉMITÉ D’UN VÉHICULE FERROVIAIRE À UN ÉLÉMENT STRUCTURAL DE CARROSSERIE D’UN VÉHICULE ET VÉHICULE FERROVIAIRE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2018 Bulletin 2018/26**

(73) Proprietor: **Bombardier Transportation GmbH**
**10785 Berlin (DE)**

(72) Inventor: **BJÖRN FHAGER, Björn**
**70210 Örebro (SE)**

(74) Representative: **Alatis**
**3 rue Paul Escudier**
**75009 Paris (FR)**

(56) References cited:
**DE-A1-102007 002 699**
**DE-A1-102009 058 388**
**DE-U1-202007 016 945**
**DE-U1-202007 016 945**
**US-A1- 2011 277 396**
**US-B1- 6 431 083**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 339 660 B1

## Description

### TECHNICAL FIELD OF THE INVENTION

The present invention relates a method and a device for fastening a mask of a rail vehicle to a structural element of a vehicle body.

### BACKGROUND ART

When front mask of a rail vehicle is mounted onto a lower structural element of the vehicle body, such as an anti-climber structure, the access to the attachment locations from inside the driver's cabin may be hindered by a number of elements which are pre-assembled or integral with the front mask, such as inner walls, or a windscreen. Access from below the anti-climber structure is easier but the lack of access from above renders a conventional bolt and nut assembly difficult.

Moreover, the manufacturing and assembly tolerances have to be considered. These tolerances may amount to 10 mm or more between the lower structural element of the vehicle body and the front mask in the longitudinal, transverse and vertical direction. In order to compensate for these tolerances, and because of the lack of accessibility of the interface between the mask and the structure of the vehicle body, glue fixation is usually preferred.

An attachment device, particularly for motor vehicle, is disclosed in DE102007002699. The attachment device has a threaded piece, which is fixed by a mounting component, particularly screw, at the carrying component. An adjusting part is arranged with a threaded piece in an adjustable manner, over which the attachment part is carried. The threaded piece is adjusted transverse to the attachment direction of the mounting component. The threaded piece has an expanded through opening in a cross section opposite the mounting component.

### SUMMARY OF THE INVENTION

The invention aims to provide an improved mechanical fixation between an end mask of a rail vehicle and a structural element of a vehicle body.

In particular, the invention aims to provide a mechanical connection, which accommodates high manufacturing and assembly tolerances.

According to a first aspect of the invention, there is provided a fastening device for connecting an end mask of a rail vehicle to a structural element of a body of the rail vehicle, comprising:

- a bolt having a head and a shank, the shank having a threaded tip portion, the shank having an external diameter d;
- a tubular bushing provided with a threaded through hole and a fastening interface for fastening the tubular bushing to the structural element of the rail vehicle body,
- a sleeve passing through the threaded through hole of the tubular bushing, the sleeve having an externally threaded wall threadedly engaged with the threaded through hole of the tubular bushing, the sleeve having two opposite axial ends protruding from opposite ends of the tubular bushing, the sleeve having an internal cylindrical through cavity having a diameter D such that at least one of the following conditions is met:

$$D>1.5\ d$$

$$D-d>10\ mm$$

- a nut threadedly engaged with the threaded tip portion of the shank, wherein the nut has a flat base resting on one of the protruding axial ends of the threaded sleeve, and an external edge of the flat base of the nut is at a distance F of the shank such that

$$F+d>D$$

- a spacer having a through hole, a flat back face resting against one of the protruding axial ends of the sleeve and a front face opposite the flat back face, wherein the head of the bolt rests directly or indirectly against the front face, and an external edge of the flat back face is at a distance E of the through hole of the spacer such that

$$E+d>D$$

The spacer has a tapered shape with a large base formed by the back face and a small base formed by the front face and the nut has a tapered shape.

Thanks to the threaded connection between the tubular bushing and the threaded sleeve, tolerances in the axial direction between the mask and the structural element can be accommodated. The radial tolerances parallel to a plane perpendicular to the axial direction are accommodated by the large diameter D of the through cavity of the threaded sleeve and the matching dimensions of the flat base of the nut and back face of the spacer.

According to a preferred embodiment, $D > 2\ d$. Preferably, $D > 2.5\ d$.

Preferably, a length $L$ of the externally threaded wall of the sleeve measured in an axial direction and an axial distance $B$ between the opposite ends of the tubular bushing are such that $L - B > 20$ mm, and preferably such that $L - B > 30$ mm.

According to one embodiment, the fastening interface of the tubular bushing includes a flange provided with through holes for receiving fastening elements, in particular bolts, screws or rivets for fastening the tubular bushing to the structural element of the vehicle body. Other fastening methods are possible depending on the shape of the structural element of the vehicle body.

Preferably, the fastening device further comprises a lock nut screwed onto the sleeve and resting against one of the opposite axial ends of the tubular bushing between the tubular bushing and the spacer. The lock nut tightens the threaded connection between the tubular bushing and the threaded sleeve after the position of the sleeve has been adjusted.

The axial end of the sleeve which abuts against the spacer may be provided with an external collar of flange to provide a larger contact interface and limit the axial movement of the sleeve with respect to the bushing.

Preferably, the fastening device further comprises a locking washer sandwiched between the head of the bolt and the front face of the spacer to tighten the threaded engagement between the threaded tip portion of the bolt and the nut.

According to another aspect of the invention, there is provided a rail vehicle comprising a vehicle body comprising a structural element, a end mask for covering a front end of the vehicle body, and a fastening device as described hereinbefore, wherein the tubular bushing is fixed to or integral with the structural element and the nut is fixed to or integral with the end mask. As the nut is fixed to or integral with the end mask, no access to the nut is necessary during the assembly of the end mask with the structural element.

Preferably, the structural element is an element of an underframe of the vehicle body, preferably an anticlimber element. The axis of the bolt is preferably vertical, with the head below the shank.

According to a preferred embodiment, the end mask is made of a fibre-reinforced composite material, preferably glass-reinforced plastic. Preferably, the end mask is a front mask of the vehicle provided with a windshield. Advantageously, the nut is laminated to the end mask so that the end mask can be mounted onto the structural element without access to the nut.

According to another aspect of the invention, there is provided a method for assembling the rail vehicle described hereinbefore, comprising:

- fastening the tubular bushing to the structural element;
- positioning the end mask relative to the structural element of the vehicle body such that the nut at least partially aligns with the tubular bushing;
- screwing the sleeve into the tubular bushing until one of the opposite axial ends of the sleeve meets the flat base
- inserting the shank of the bolt into the spacer;
- inserting the shank of the bolt through the sleeve into the nut and screwing the threaded tip portion of the shank into the nut.

The nut can be integral with the end mask or can have been fixed to the end mask during a preliminary assembly step of the end mask.

Preferably, the shank of the bolt is inserted into a locking washer before the shank of the bolt is inserted into the spacer.

Preferably, a lock nut is screwed onto the sleeve in abutment with against one of the opposite axial ends of the tubular bushing before the shank of the bolt is inserted through the sleeve into the nut.

Preferably, the lock nut is preassembled onto the sleeve before the sleeve is screwed into the tubular bushing.

## BRIEF DESCRIPTION OF THE FIGURES

Other advantages and features of the invention will then become more clearly apparent from the following description of a specific embodiment of the invention given as a non-restrictive example only and represented in the accompanying drawings in which:

- figure 1 is an isometric view of a front end of a rail vehicle comprising a front mask fixed to a structural element of the vehicle body by means of fastening devices;
- figure 2 is an exploded view of one of the fastening device of figure 1;
- figure 3 illustrates a first step of an assembly process of the front mask and structural element;
- figure 4 illustrates a second step of the assembly process of the front mask and structural element;
- figure 5 illustrates a third step of the assembly process of the front mask and structural element;
- figure 6 illustrates a fourth step of the assembly process of the front mask and structural element;
- figure 7 illustrates a fifth step of the assembly process of the front mask and structural element;
- figure 8 illustrates a sixth step of the assembly process of the front mask and structural element;
- figure 9 is a cross-section of the fastening device in a nominal position;

- figure 10 is a cross-section of the fastening device in a laterally offset position;
- figures 11A to 11C illustrate various end positions of the fastening device to accommodate manufacturing or assembly tolerances in the vertical, transversal and longitudinal directions.

Corresponding reference numerals refer to the same or corresponding parts in each of the figures.

## DETAILED DESCRIPTION OF A PREFERRED EMBODIMENT

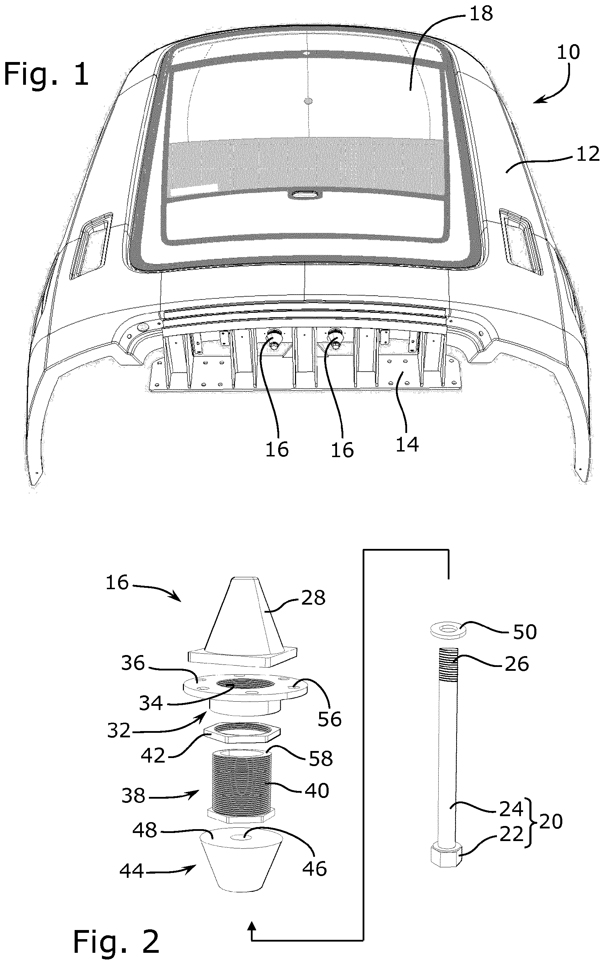

A front part of a rail vehicle **10** illustrated in figure **1** comprises a front mask **12** fixed to a lower structural element **14** of the vehicle body, here an anti-climb subassembly which is part of the underframe of the vehicle body, by means of mechanical fastening devices **16,** which during the assembly process are accessible only from the external side, i.e. not from the inside of the front mask **12.** The front mask **12** is made of glass-reinforced plastic or another fibre-reinforced composite material and provided with a windshield **18.**

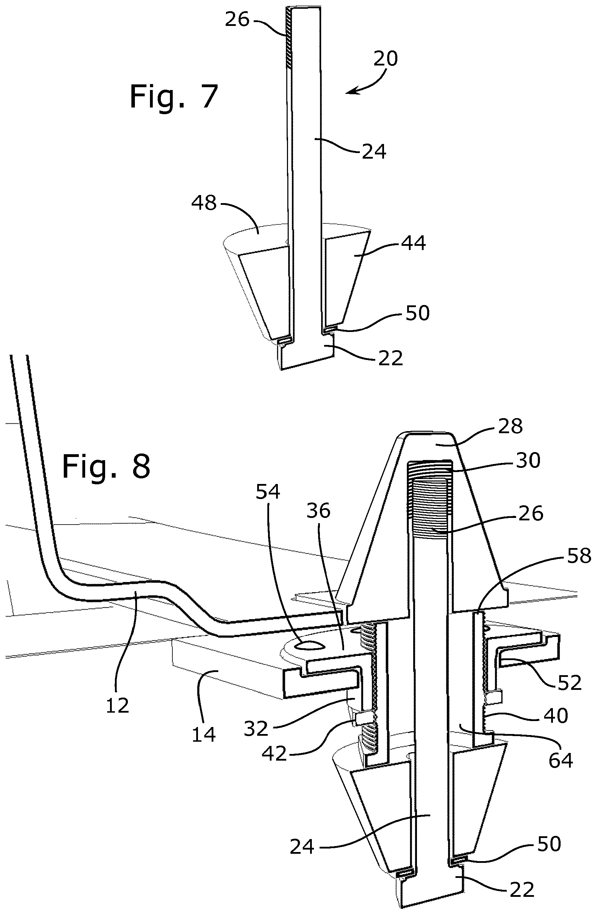

As illustrated in figures **2** and **8,** at least one of the fastening devices **16** comprises a fastening bolt **20** having a head **22** and a shank **24** provided with a threaded tip portion **26,** a tapered nut **28** provided with an inner thread **30** for engagement with the threaded tip portion **26** of the shank **24,** a tubular bushing **32** provided with a threaded through hole **34** and a mounting flange **36,** a sleeve **38** having an externally threaded wall **40** for engagement with the threaded through hole **34,** a lock nut **42,** a spacer **44** having a through hole **46** and a flat back face **48** and a locking washer **50.**

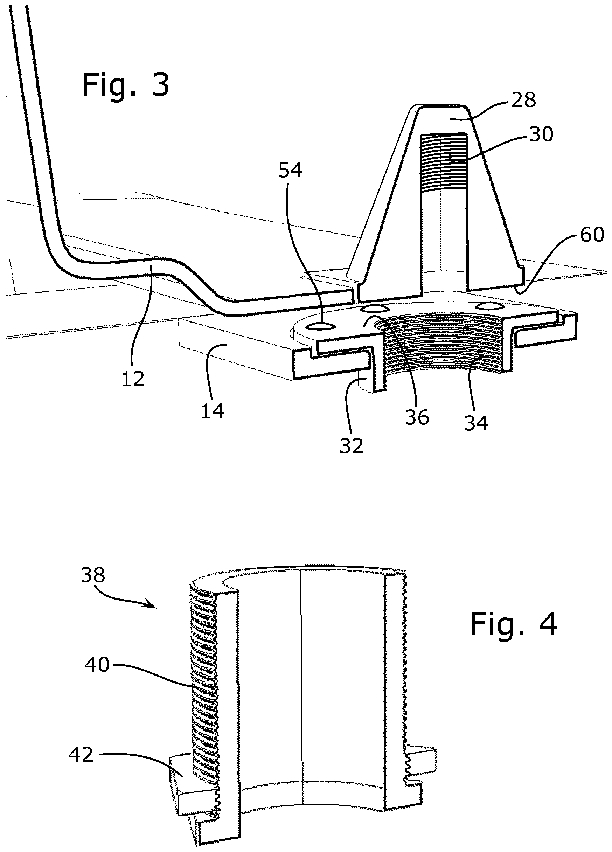

Figures **3** to **8** illustrate various steps of the assembly process of the front mask **12** with anti-climb subassembly **14.**

As preliminary step of the assembly process, the nut **28** has been laminated to a wall of the front mask **12** during manufacture of the front mask.

The bushing **32** is inserted in a through hole **52** of the anti-climb subassembly **14** and rivets **54** are inserted into through holes **56** of the flange **36** of the bushing **32** to fasten the bushing **32** to the edges of the through hole **52** of the anti-climb subassembly **14.**

After this initial step, the front mask **12** is positioned on top of the anti-climb subassembly **14** as shown in Figure **3,** such that the nut **28** at least partially aligns with the tubular bushing **32.**

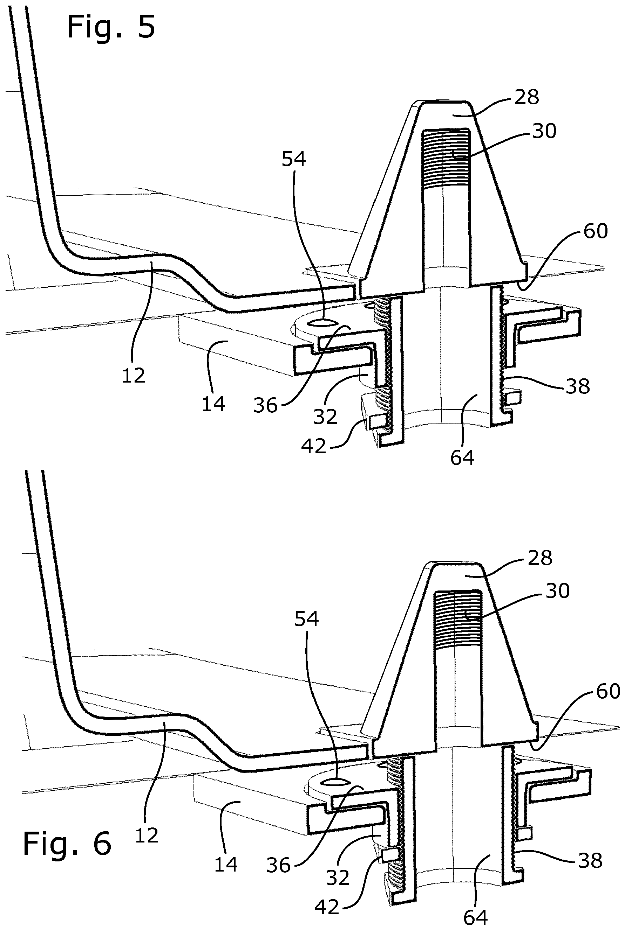

The lock nut **42** is preassembled onto the sleeve **38** as shown in figure **4** and the sleeve **38** is screwed into the tubular bushing **32** until one axial end **58** of the sleeve **38** meets a flat base **60** of the nut **28** as shown in figure **5.** The lock nut **42** is screwed onto the threaded sleeve **38** in abutment with against an axial end of the tubular bushing **32** to tighten the threaded connection between the sleeve **38** and the bushing **32.** The shank **24** of the bolt **20** is inserted into the locking washer **50** (figure **6**), into the spacer **44** (figure **7**) and through the threaded sleeve **38** into the nut **28** so that the threaded tip portion **26** of the shank **24** can be screwed into the nut **28** (figure **8**) until the locking washer **26** is flattened to tighten the threaded connection.

In the final state of figure **8,** the upper axial end **58** of the sleeve **38** protrudes upwardly and bears against the flat base **60** of the nut and a lower end **62** that protrudes downwardly with respect to the bushing **32** and bears against the spacer **44.** The sleeve **38,** the spacer **44** and the locking washer **50** are sandwiched between the nut **28** and the head **22** of the bolt **20.**

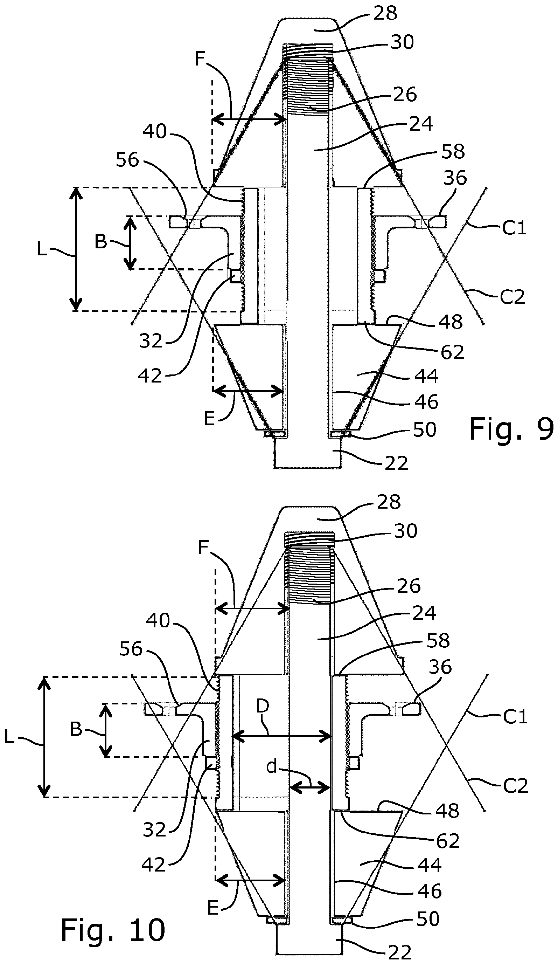

As illustrated in figures **9** and **10,** the shank **24** of the bolt **20** has an external diameter ***d,*** and passes through an internal cylindrical through cavity **64** of the sleeve, which has a diameter ***D,*** which is substantially greater than ***d*** to provide a clearance in the longitudinal and transverse direction, which is greater than the tolerances resulting from the manufacturing and assembly of the front mask and of the anti-climb subassembly. Both of the following conditions are met:

$$D > 1.5\,d$$

$$D - d > 10\ \mathrm{mm}$$

The flat base **60** of the nut **28** has to be wide enough to ensure that it rests on the protruding axial end **58** of the sleeve **38** irrespective of the position of the bolt **20** into the sleeve **38.** Thus, the distance **F** between the external edge of the flat base (**60**) of the nut (**28**) and the inner thread **30** of the nut **28** is such that

$$F + d > D$$

Similarly, the dimensions of the flat back face **48** of the spacer **44** have to be such that back face **48** rests on the protruding axial end **62** of the sleeve **38** irrespective of the position of the bolt **20** into the sleeve **38.** Hence, the shortest distance ***E*** between external edge of the flat back face **48** and the through hole **46** of the spacer **44** is such that:

$$E + d > D$$

The length ***L*** of the externally threaded wall of the sleeve measured in an axial direction should be substantially greater than the axial distance ***B*** between the opposite ends of the tubular bushing **32** to allow an adjustment of the vertical position of the nut **28** with respect to the bushing **32** to compensate the positioning tolerance of the front mask **12** relative to the anti-climb subassembly **14** in the axial (vertical) direction.

In practice, ***L*** and ***B*** are such that

$$L - B > 20 \text{ mm},$$

and preferably such that

$$L - B > 30 \text{ mm},$$

In figures **9** and **10** the 30° cones of forces $\boldsymbol{C_1}$ and $\boldsymbol{C_2}$ at the interface between the bolt head **22** and the locking washer **50** and at the interface between the threaded tip portion **26** of the bolt **20** and the nut **28** have been drawn. The dimensions of the bolt **20** are such that in the worst case scenario of figure **10,** the contact interface between the flat base **60** of the nut **28** and the sleeve **38** on the one hand and the contact interface between the spacer **44** and the sleeve **38** on the other hand are within the 30° force cones $\boldsymbol{C_1}$ and $\boldsymbol{C_2}$.

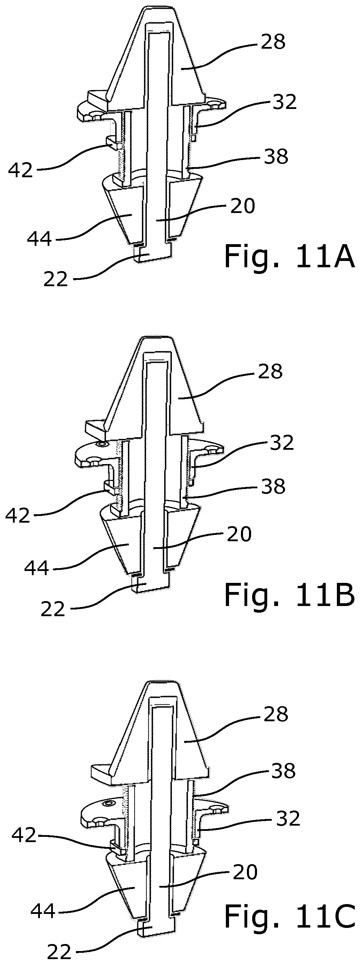

Figures **11A** illustrates the nominal position of the fastening device **16.** Figure **11B** illustrates a position of the fastening device **16** for a front mask **12,** which is closer to anti-climb subassembly **14** than the nominal position. Figure **11C** illustrates a position of the fastening device **16** for a front mask **12,** which is farther away from the anti-climb subassembly **14** than the nominal position.

### Claims

**1.** A fastening device (16) for connecting an end mask (12) of a rail vehicle (10) to a structural element (14) of a body of the rail vehicle (10), comprising:

- a bolt (20) having a head (22) and a shank (24), the shank (24) having a threaded tip portion (26), the shank (24) having an external diameter *d*;
- a tubular bushing (32) provided with a threaded through hole (34) and a fastening interface (36) for fastening the tubular bushing (32) to the structural element (14) of the rail vehicle body,
- a sleeve (38) passing through the threaded through hole (34) of the tubular bushing (32), the sleeve (38) having an externally threaded wall (40) threadedly engaged with the threaded through hole (34) of the tubular bushing (32), the sleeve (38) having two opposite axial ends (58, 62) protruding from opposite ends of the tubular bushing (32), the sleeve (38) having an internal cylindrical through cavity (64) having a diameter D
- a nut (28) threadedly engaged with the threaded tip portion (26) of the shank (24), wherein the nut (38) has a flat base (60) resting on one (58) of the protruding axial ends (58, 62) of the threaded sleeve (38), and an external edge of the flat base (60) of the nut (28) is at a distance *F* of the shank such that

$$F + d > D$$

- a spacer (44) having a through hole (46), a flat back face (48) resting against one (62) of the protruding axial ends (58, 62) of the sleeve (38) and a front face opposite the flat back face (48), wherein the head (22) of the bolt (20) rests directly or indirectly against the front face, and an external edge of the flat back face (48) is at a distance *E* of the through hole (46) of the spacer (44) such that

$$E + d > D$$

**characterised in that** the spacer (44) has a tapered shape with a large base formed by the back face (48) and a small base formed by the front face, the nut (28) has a tapered shape and **in that** at least one of the following conditions is met:

$$D > 1.5\, d$$

$$D - d > 10 \text{ mm}.$$

**2.** The fastening device of claim 1, wherein a length *L* of the externally threaded wall (40) of the sleeve (38) measured in an axial direction and an axial distance *B* between the opposite ends of the tubular bushing (32) are such that

$$L - B > 20 \text{ mm},$$

and preferably such that

$$L - B > 30 \text{ mm}.$$

**3.** The fastening device of any one of the preceding claims, wherein the fastening interface (36) of the tubular bushing (32) includes a flange (36) provided with through holes (56) for receiving fastening elements (54), in particular bolts, screws or rivets for fastening the tubular bushing (32) to the structural element (14) of the vehicle body.

**4.** The fastening device of any one of the preceding claims, further comprising a lock nut (42) screwed onto the sleeve (38) and resting against one of the opposite axial ends of the tubular bushing (32) between the tubular bushing (32) and the spacer (44).

**5.** The fastening device of any one of the preceding claims, further comprising a locking washer (50) sandwiched between the head (22) of the bolt (20) and the front face of the spacer (44).

**6.** A rail vehicle (10) comprising a vehicle body comprising a structural element (14), a end mask (12) for covering a front end of the vehicle body, **characterised in that** it further comprises a fastening device (16) according to any one of the preceding claims, wherein the tubular bushing (32) is fixed to or integral with the structural element (14) and the nut (28) is fixed to or integral with the end mask (12).

**7.** The rail vehicle of claim 6, wherein the structural element (14) is an element of an underframe of the vehicle body, preferably an anti-climber element.

**8.** The rail vehicle of claim 6 or claim 7, wherein the end mask (12) is made of a fibre-reinforced composite material, preferably glass-reinforced plastic.

**9.** The rail vehicle of claim 8, wherein the nut (28) is laminated to the end mask (12).

**10.** A method for assembling the rail vehicle of any one of claims 1 to 9, comprising:

- fastening the tubular bushing (32) to the structural element (14);
- positioning the end mask (12) relative to the structural element (14) of the vehicle body such that the nut (28) at least partially aligns with the tubular bushing (32);
- screwing the sleeve (38) into the tubular bushing (32) until one of the opposite axial ends (58, 62) of the sleeve (38) meets the flat base (60)
- inserting the shank (24) of the bolt (20) into the spacer (44);
- inserting the shank (24) of the bolt (20) through the sleeve (38) into the nut (28) and screwing the threaded tip portion (26) of the shank (24) into the nut (28).

**11.** The method of claim 10, wherein the shank (24) of the bolt (20) is inserted into a locking washer (50) before the shank (24) of the bolt is inserted into the spacer (44).

**12.** The method of any one of claims 10 to 11, wherein a lock nut (42) is screwed onto the sleeve (38) in abutment with against one of the opposite axial ends of the tubular bushing (32) before the shank (24) of the bolt (20) is inserted through the sleeve (38) into the nut (28).

**13.** The method of claim 12, wherein the lock nut (42) is preassembled onto the sleeve (38) before the sleeve (38) is screwed into the tubular bushing (32).

## Patentansprüche

**1.** Befestigungsvorrichtung (16) zum Verbinden einer Endmaske (12) eines Schienenfahrzeugs (10) mit einem Strukturelement (14) eines Wagenkastens des Schienenfahrzeugs (10), umfassend:

- einen Bolzen (20) mit einem Kopf (22) und einem Schaft (24), wobei der Schaft (24) einen mit Gewinde versehenen Spitzenabschnitt (26) aufweist, wobei der Schaft (24) einen Außendurchmesser *d* aufweist;
- eine rohrförmige Buchse (32), die mit einem Gewindedurchgangsloch (34) und einer Befestigungsschnittstelle (36) zum Befestigen der rohrförmigen Buchse (32) an dem Strukturelement (14) des Wagenkastens versehen ist;
- eine Hülse (38), die durch das Gewindedurchgangsloch (34) der rohrförmigen Buchse (32) hindurchgeht, wobei die Hülse (38) eine Außengewindewand (40) aufweist, die mit dem Gewindedurchgangsloch (34) der rohrförmigen Buchse (32) in Gewindeeingriff steht, wobei die Hülse (38) zwei gegenüberliegende axiale Enden (58, 62) aufweist, die von gegenüberliegenden Enden der rohrförmigen Buchse (32) vorstehen, wobei die Hülse (38) einen inneren zylindrischen Durchgangshohlraum (64) mit einem Durchmesser *D* aufweist;
- eine Mutter (28), die mit dem mit Gewinde versehenen Spitzenabschnitt (26) des Schaftes (24) in Gewindeeingriff steht, wobei die Mutter (38) eine flache Basis (60) aufweist, die auf einem (58) der vorstehenden axialen Enden (58, 62) der Gewindehülse (38) aufliegt, und wobei eine Außenkante der flachen Basis (60) der Mutter (28) in einem solchen Abstand *F* des Schaftes liegt, dass

$$F + d > D;$$

- einen Abstandshalter (44) mit einem Durchgangsloch (46), einer flachen Rückseite (48), die an einem (62) der vorstehenden axialen Enden (58, 62) der Hülse (38) anliegt, und einer der flachen Rückseite (48) gegenüberliegenden Vorderseite, wobei der Kopf (22) des Bolzens (20) direkt oder indirekt an der Vorderseite anliegt und wobei sich eine Außenkante der flachen Rückseite (48) in einem Abstand E von dem Durchgangsloch (46) des Abstandshalters (44) befindet, derart, dass

$$E + d > D;$$

**dadurch gekennzeichnet, dass** der Abstandshalter (44) eine konische Form mit einer durch die Rückseite (48) gebildeten großen Basis und einer durch die Vorderseite gebildeten kleinen Basis aufweist, die Mutter (28) eine konische Form aufweist und dass mindestens eine der folgenden Bedingungen erfüllt ist:

$$D > 1{,}5\ d;$$

$$D - d > 10 \text{ mm}.$$

**2.** Befestigungsvorrichtung nach Anspruch 1, wobei eine in axialer Richtung gemessene Länge $L$ der Außengewindewand (40) der Hülse (38) und ein axialer Abstand $B$ zwischen den gegenüberliegenden Enden der rohrförmigen Buchse (32) derart beschaffen sind, dass

$$L - B > 20 \text{ mm},$$

und vorzugsweise derart, dass

$$L - B > 30 \text{ mm}.$$

**3.** Befestigungsvorrichtung nach einem der vorhergehenden Ansprüche, wobei die Befestigungsschnittstelle (36) der rohrförmigen Buchse (32) einen Flansch (36) beinhaltet, der mit Durchgangslöchern (56) zur Aufnahme von Befestigungselementen (54), insbesondere Bolzen, Schrauben oder Nieten, zur Befestigung der rohrförmigen Buchse (32) an dem Strukturelement (14) des Wagenkastens versehen ist.

**4.** Befestigungsvorrichtung nach einem der vorhergehenden Ansprüche, ferner umfassend eine Kontermutter (42), die auf die Hülse (38) geschraubt ist und an einem der gegenüberliegenden axialen Enden der rohrförmigen Buchse (32) zwischen der rohrförmigen Buchse (32) und dem Abstandshalter (44) anliegt.

**5.** Befestigungsvorrichtung nach einem der vorhergehenden Ansprüche, ferner umfassend eine Sicherungsscheibe (50), die zwischen dem Kopf (22) des Bolzens (20) und der Vorderseite des Abstandshalters (44) sandwichartig angeordnet ist.

**6.** Schienenfahrzeug (10), umfassend einen Wagenkasten mit einem Strukturelement (14), eine Endmaske (12) zum Abdecken eines vorderen Endes des Wagenkastens, **dadurch gekennzeichnet, dass** es ferner eine Befestigungsvorrichtung (16) nach einem der vorstehenden Ansprüche umfasst, wobei die rohrförmige Buchse (32) an dem Strukturelement (14) befestigt oder mit diesem einstückig ausgebildet ist und die Mutter (28) an der Endmaske (12) befestigt oder mit dieser einstückig ausgebildet ist.

**7.** Schienenfahrzeug nach Anspruch 6, wobei das Strukturelement (14) ein Element eines Untergestells des Wagenkastens, vorzugsweise ein Kletterschutzelement, ist.

**8.** Schienenfahrzeug nach Anspruch 6 oder 7, wobei die Endmaske (12) aus einem faserverstärkten Verbundwerkstoff, vorzugsweise aus glasfaserverstärktem Kunststoff, hergestellt ist.

**9.** Schienenfahrzeug nach Anspruch 8, wobei die Mutter (28) an die Endmaske (12) laminiert ist.

**10.** Verfahren zum Montieren des Schienenfahrzeugs nach einem der Ansprüche 1 bis 9, Folgendes umfassend:

- Befestigen der rohrförmigen Buchse (32) an dem Strukturelement (14);
- Positionieren der Endmaske (12) relativ zum Strukturelement (14) des Wagenkastens, so dass die Mutter (28) zumindest teilweise mit der Rohrbuchse (32) ausgerichtet ist;
- Einschrauben der Hülse (38) in die rohrförmige Buchse (32), bis eines der gegenüberliegenden axialen Enden (58, 62) der Hülse (38) an die flache Basis (60) stößt;
- Einführen des Schaftes (24) des Bolzens (20) in den Abstandshalter (44);
- Einführen des Schaftes (24) des Bolzens (20) durch die Hülse (38) in die Mutter (28) und Einschrauben des mit Gewinde versehenen Abschnitts (26) des Schaftes (24) in die Mutter (28).

**11.** Verfahren nach Anspruch 10, wobei der Schaft (24) des Bolzens (20) in eine Sicherungsscheibe (50) eingeführt wird, bevor der Schaft (24) des Bolzens in den Abstandshalter (44) eingeführt wird.

**12.** Verfahren nach einem der Ansprüche 10 bis 11, wobei eine Sicherungsmutter (42) auf die Hülse (38) geschraubt wird, die an einem der gegenüberliegenden axialen Enden der rohrförmigen Buchse (32) anliegt, bevor der Schaft (24) des Bolzens (20) durch die Hülse (38) in die Mutter (28) eingeführt wird.

**13.** Verfahren nach Anspruch 12, wobei die Sicherungsmutter (42) auf der Hülse (38) vormontiert wird, bevor die Hülse (38) in die rohrförmige Buchse (32) eingeschraubt wird.

## Revendications

**1.** Dispositif de fixation (16) permettant de connecter un masque d'extrémité (12) d'un véhicule ferroviaire (10) à un élément structural (14) d'une carrosserie de véhicule ferroviaire (10), comprenant :

- un boulon (20) comportant une tête (22) et une tige (24), la tige (24) comportant une partie de pointe filetée (26), la tige (24) ayant un diamètre extérieur *d*;
- une douille tubulaire (32) pourvue d'un trou traversant fileté (34) et une interface de fixation (36) permettant de fixer la douille tubulaire (32) à l'élément structural (14) de la carrosserie de véhicule ferroviaire,
- un manchon (38) passant à travers le trou traversant fileté (34) de la douille tubulaire (32), le manchon (38) comportant une paroi filetée extérieurement (40) mise en prise par filetage avec le trou traversant fileté (34) de la douille tubulaire (32), le manchon (38) ayant deux extrémités axiales opposées (58, 62) faisant saillie à partir des extrémités opposées de la douille tubulaire (32), le manchon (38) comportant une cavité traversante cylindrique interne (64) de diamètre D
- un écrou (28) mis en prise par filetage avec la partie d'extrémité filetée (26) de la tige (24), l'écrou (38) comportant une base plate (60) reposant sur l'une (58) des extrémités axiales saillantes (58, 62) du manchon fileté (38), et un bord extérieur de la base plate (60) de l'écrou (28) se trouvant à une distance *F* de la tige de telle sorte que

$$F + d > D$$

- une entretoise (44) ayant un trou traversant (46), une face arrière plate (48) reposant sur l'une (62) des extrémités axiales saillantes (58, 62) du manchon (38) et une face avant opposée à la face arrière plate (48), la tête (22) du boulon (20) reposant directement ou indirectement sur la face avant, et un bord extérieur de la face arrière plate (48) se trouvant à une distance *E* du trou traversant (46) de l'entretoise (44) de telle sorte que

$$E + d > D$$

**caractérisé en ce que** l'entretoise (44) présente une forme effilée avec une grande base formée par la face arrière (48) et une petite base formée par la face avant, l'écrou (28) présente une forme effilée et **en ce qu'**au moins l'une des conditions suivantes est remplie :

$$D > 1{,}5\ d$$

$$D - d > 10\ \text{mm}.$$

**2.** Dispositif de fixation selon la revendication 1, dans lequel une longueur *L* de la paroi filetée extérieurement (40) du manchon (38) mesurée dans une direction axiale et une distance axiale *B* entre les extrémités opposées de la douille tubulaire (32) sont telles que

$$L - B > 20\ \text{mm},$$

et de préférence telles que

$$L - B > 30\ \text{mm}.$$

**3.** Dispositif de fixation selon l'une quelconque des revendications précédentes, dans lequel l'interface de fixation (36) de la douille tubulaire (32) comprend une bride (36) pourvue de trous traversants (56) pour recevoir des éléments de fixation (54), en particulier des boulons, des vis ou des rivets pour fixer la douille tubulaire (32) à l'élément structural (14) de la carrosserie de véhicule.

**4.** Dispositif de fixation selon l'une quelconque des revendications précédentes, comprenant en outre un écrou de blocage (42) vissé sur le manchon (38) et reposant sur l'une des extrémités axiales opposées de la douille tubulaire (32) entre la douille tubulaire (32) et l'entretoise (44).

**5.** Dispositif de fixation selon l'une quelconque des revendications précédentes, comprenant en outre une rondelle de blocage (50) prise en sandwich entre la tête (22) du boulon (20) et la face avant de l'entretoise (44).

**6.** Véhicule ferroviaire (10) comprenant une carrosserie comprenant un élément structural (14), un masque d'extrémité (12) pour recouvrir une extrémité avant de la carrosserie, **caractérisé en ce qu'**il comprend en outre un dispositif de fixation (16) selon l'un quelconque selon les revendications précédentes, dans lequel la douille tubulaire (32) est fixée à l'élément structural (14) ou solidaire de celui-ci et l'écrou (28) est fixé au masque d'extrémité (12) ou solidaire de celui-ci.

**7.** Véhicule ferroviaire selon la revendication 6, dans lequel l'élément structural (14) est un élément d'un châssis inférieur de la carrosserie de véhicule, de préférence un élément anti-chevauchement.

**8.** Véhicule ferroviaire selon la revendication 6 ou 7, dans lequel le masque d'extrémité (12) est constitué d'un matériau composite renforcé par des fibres, de préférence de plastique renforcé par du verre.

**9.** Véhicule ferroviaire selon la revendication 8, dans lequel l'écrou (28) est laminé sur le masque d'extrémité (12).

**10.** Procédé d'assemblage du véhicule ferroviaire selon l'une quelconque des revendications 1 à 9, comprenant :

- la fixation de la douille tubulaire (32) à l'élément structural (14) ;
- le positionnement du masque d'extrémité (12) par rapport à l'élément structural (14) de la carrosserie de véhicule de telle sorte que l'écrou (28) s'aligne au moins en partie avec la douille tubulaire (32) ;
- le vissage du manchon (38) dans la douille tubulaire (32) jusqu'à ce que l'une des extrémités axiales opposées (58, 62) du manchon (38) rencontre la base plate (60)
- l'insertion de la tige (24) du boulon (20) dans l'entretoise (44) ;
- l'insertion de la tige (24) du boulon (20) à travers le manchon (38) dans l'écrou (28) et le vissage de la partie de pointe filetée (26) de la tige (24) dans l'écrou (28).

**11.** Procédé selon la revendication 10, dans lequel la tige (24) du boulon (20) est insérée dans une rondelle de blocage (50) avant l'insertion de la tige (24) du boulon dans l'entretoise (44).

**12.** Procédé selon l'une quelconque des revendications 10 à 11, dans lequel un écrou de blocage (42) est vissé sur le manchon (38) en butée avec l'une des extrémités axiales opposées de la douille tubulaire (32) avant l'insertion de la tige (24) du boulon (20) à travers le manchon (38) dans l'écrou (28).

**13.** Procédé selon la revendication 12, dans lequel l'écrou de blocage (42) est pré-assemblé sur le manchon (38) avant le vissage du manchon (38) dans la douille tubulaire (32).

Fig. 1
18
10
12
16
16
14

16
28
50
36
26
34
56
32
42
58
38
40
24
20
48
22
44
46
Fig. 2

Fig. 3
28
30
54
60
12
14
36
34
32

38
Fig. 4
40
42

Fig. 5
28
30
54
60
12
14
36
32
38
42
64
Fig. 6
28
30
54
60
12
14
36
32
38
42
64

Fig. 7
26
20
24
48
44
50
22
Fig. 8
28
30
54
36
26
58
52
12
14
32
42
40
64
24
50
22

28
30
F
26
24
40
58
56
36
C1
L
B
C2
32
48
62
42
44
46
E
50
22
28
30
F
26
24
40
58
56
36
D
C1
L
B
d
C2
48
32
62
42
44
46
E
50
22

Fig. 9

Fig. 10

28
32
42
38
20
44
22
Fig. 11A

28
32
38
42
20
44
22
Fig. 11B

28
38
32
42
20
44
22
Fig. 11C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102007002699